# EUROPÄISCHE PATENTSCHRIFT

(11) **EP 3 140 228 B1**
(45) Veröffentlichungstag und Bekanntmachung des Hinweises auf die Patenterteilung: **02.01.2019**
(21) Anmeldenummer: 15711416.6
(22) Anmeldetag: 26.02.2015
(51) Int. Cl.: B65G 21/20, B65G 47/252

(54) **MAGNETISCHE AUFSTELLVORRICHTUNG FÜR DOSENZARGEN**
MAGNETIC STANDING-UP APPARATUS FOR CAN BODIES
DISPOSITIF MAGNÉTIQUE DE RELEVAGE DE CORPS DE BOÎTE

(30) Priorität: 05.05.2014 CH 666142014
(43) Veröffentlichungstag der Anmeldung: 15.03.2017
(73) Patentinhaber: Soudronic AG, 8962 Bergdietikon (CH)
(72) Erfinder: GAUCH, Pascal, CH-8965 Berikon (CH); TAIANA, Peter, CH-8967 Widen (CH)
(74) Vertreter: Naiu, Radu Mircea
(86) Internationale Anmeldenummer: PCT/CH2015/000029
(87) Internationale Veröffentlichungsnummer: WO 2015/168811

(56) Entgegenhaltungen:
- WO-A1-2014/043821
- NL-A- 6 902 464

## Beschreibung

### TECHNISCHES GEBIET

Die Erfindung betrifft eine magnetische Zargenaufstellvorrichtung nach dem Oberbegriff des Anspruchs 1, eine Vorrichtung zur Herstellung von Dosen mit einer solchen Zargenaufstellvorrichtung und eine Verwendung einer solchen Zargenaufstellvorrichtung.

### STAND DER TECHNIK

Bei der Herstellung von Dosenzargen, nachdem die Zarge die Schweissmaschine verlassen hat, wird sie direkt weiterverarbeitet oder es wird die aufgebrachte Nahtabdeckung eingebrannt. Für nachfolgende Operationen wird die liegende Dose in der Regel in die aufrechte, vertikale Lage gebracht. Es sind Zargenaufsteller bekannt, bei denen dies mit Hilfe eines Magnetfelds erfolgt. Dabei geschieht das Aufstellen üblicherweise über die Vorderkante der Zarge, so dass sich das Hinterteil der Zarge nach oben bewegt. Bekannte magnetische Zargenaufsteller arbeiten mit Magnetkästen die beidseits des Förderwegs der Zarge angeordnet sind.

Ein Beispiel für eine solche Aufstellvorrichtung ist ein magnetischer Zargenaufsteller der Firma O.S. Walker Magnetics, USA. Mit diesem Zargenaufsteller wird die Zarge über deren vorlaufende Kante bzw. die Vorderkante gedreht bzw. gekippt, so dass die Zarge mit ihrem Hinterteil aufgestellt wird. Durch die Aneinanderreihung von Magnetkörpern, welche aus einzelnen Magneten bestehen die in einem verschlossenen Kasten angeordnet sind, entsteht ein Magnetfeld, welches einem einzelnen grossen Magneten entspricht. Mit Hilfe zweier Magnetkästen beidseits des Förderwegs der Zargen wird die Zarge zentriert, was die Gefahr von Kratzern auf dem Zargenlack reduziert. Diese Lösung funktioniert für verschiedenste Zargendurchmesser und -höhen und ist somit eine Universallösung, welche die Zargen mit ihrem Hinterteil aufstellt.

Ein weiterer magnetischer Zargenaufsteller ist von der Firma NSM Magnettechnik GmbH, Deutschland, bekannt und ist für dedizierte Fertigungslinien ausgebildet, bei welchen die Zargenhöhe und der Zargendurchmesser im Wesentlichen festgelegt sind. Dieser Zargenaufsteller arbeitet mit weniger Magneten, die zu einzelnen speziell angeordneten Magnetstäben zusammengefasst sind, die in verschlossenen Magnetkästen beidseits des Transportweges der Zargen in genau spezifizierter Lage angeordnet sind. Die Anordnung der Magnetstäbe ist dabei so getroffen, dass dieser Zargenaufsteller entweder für das Aufstellen über die vorlaufende Kante der Zarge oder für das Aufstellen über die nachlaufende Kante der Zarge gebaut ist.

Eine weitere Zargenaufstellvorrichtung ist in der Patentanmeldung CH 706 991 A1 offenbart. Diese Vorrichtung verwendet, wie die bereits genannten Vorrichtungen, auch Magnetkästen, die beidseits des Transportwegs der Zargen angeordnet sind.

Die Verwendung von Magnetkästen seitlich des Transportweges bringt eine Reihe von mehr oder minder ausgeprägten Nachteilen. Ein Nachteil liegt darin, dass eine erhöhte Gefahr der Kontaktierung der Magnetkästen mit den transportierten Zargen besteht, was zu einer Beschädigung der Zargen führen kann. Ferner können solche Magnetkästen schwer zu montieren und zu justieren sein. In Zusammenhang damit bringen sie den Nachteil dass der Einblick in das Innere der Vorrichtung durch ihre Lage versperrt wird, so dass der Zugang zur Vorrichtung erschwert ist. Ferner kann die Flugbahn bzw. der Aufstellvorgang der Zargen nicht oder schwerlich beobachtet werden, so dass sich Nachjustierungen der Vorrichtung schwierig gestalten.

Die internationale Patentanmeldung WO 2014/043821 A1 offenbart eine magnetische Zargenaufstellvorrichtung nach Anspruch 1. Diese umfasst ein erstes Transportmittel für liegende Dosenzargen und ein zweites Transportmittel für aufgestellte Dosenzargen. Dabei können die Dosenzargen wahlweise mit ihrem Hinterteil oder mit ihrem Vorderteil aufgestellt werden.

### DARSTELLUNG DER ERFINDUNG

Es stellt sich daher die Aufgabe, eine magnetische Aufstellvorrichtung für Dosenzargen zu schaffen, welche Abhilfe im Hinblick auf die genannten Nachteile bringt.

Diese Aufgabe wird mit einer erfindungsgemässen Zargenaufstellvorrichtung gelöst. Die magnetische Zargenaufstellvorrichtung umfasst eine Einlauftransporteinrichtung zur Förderung von liegenden Zargen, eine über der Einlauftransporteinrichtung angeordnete Transporteinrichtung zur Förderung aufgestellter, an der Transporteinrichtung hängender Zargen, und eine Steuerung. Eine erste durch die Steuerung steuerbar aktivierbare und deaktivierbare Magnetanordnung ist unter der Einlauftransporteinrichtung derart angeordnet, dass eine auf der Einlauftransporteinrichtung liegende Zarge auf der Einlauftransporteinrichtung freigebbar magnetisch festhaltbar ist. Eine zweite Magnetanordnung ist über einem Bereich der Einlauftransporteinrichtung, in welchem die Zargen transportiert werden, angeordnet und derart ausgestaltet, dass eine auf der Einlauftransporteinrichtung liegende Zarge mittels des Magnetfelds der zweiten Magnetanordnung bei deaktiviertem Magnetfeld der ersten Magnetanordnung anhebbar ist. Eine dritte Magnetanordnung ist über der Transporteinrichtung vorgesehen und derart ausgestaltet und angeordnet, dass eine angehobene Zarge weiter anhebbar und von der Einlauftransporteinrichtung abhebbar ist und an der Transporteinrichtung magnetisch hängend aufgestellt transportierbar ist. Die Steuerung ist ausgestaltet, um die erste Magnetanordnung zu aktivieren, wenn eine Vorderkante einer auf der Einlauftransporteinrichtung liegenden Zarge die zweite Magnetanordnung passiert und um die erste Magnetanordnung zu deaktivieren, wenn eine nachlaufende Kante dieser Zarge unter der zweiten Magnetanordnung zu liegen kommt.

Ferner wird die Aufgabe mit einer Vorrichtung zur Herstellung von Dosenzargen mit mindestens einer Zargenaufstellvorrichtung nach einem der vorangehenden Ansprüche gelöst.

Die erfindungsgemässe Zargenaufstellvorrichtung hat einerseits den Vorteil, dass keine Magnetkästen seitlich der Einlauftransporteinrichtung benötigt werden, die einerseits im Hinblick auf ihre Konstruktion komplexer und daher teurer sind und andererseits den Einblick in den Aufstellraum aufgrund ihrer Lage verdecken. Folglich ist die erfindungsgemässe Zargenaufstellvorrichtung günstiger in der Herstellung und sie lässt sich in Bezug auf "Flugbahn" der Zargen zwischen ihrer liegenden und ihrer aufgestellten Position besser beobachten bzw. justieren, bzw. nachjustieren. Ein weiterer Vorteil liegt darin, dass die Beschädigungsgefahr der Zargen durch eventuelle Kontaktierung mit seitlichen Magnetkästen ausgeräumt wird.

Die erfindungsgemässe Zargenaufstellvorrichtung kann zur Aufstellung von Zargen mit gängigen Abmessungen, aber insbesondere auch für Zargen mit einem Längen zu Durchmesserverhältnis von 3 zu 1 verwendet werden.

### KURZE BESCHREIBUNG DER ZEICHNUNGEN

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine schematische Seitenansicht einer erfindungsgemässen Zargenaufstellvorrichtung, und
Fig. 2 die Zargenaufstellvorrichtung aus Fig. 2 in einer Ansicht in Transportrichtung.

### WEGE ZUR AUSFÜHRUNG DER ERFINDUNG

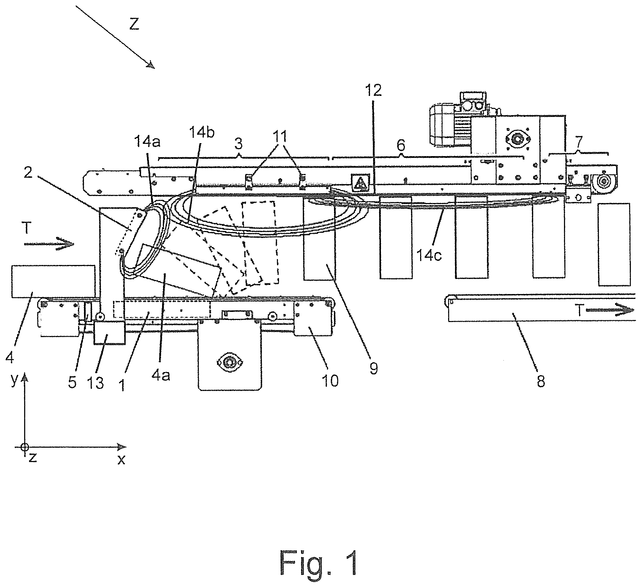

Bemerkungen und Definitionen:
Verschiedene Bezugszeichen der Zargen sollen die verschiedenen Zustände der Zargen in Bezug auf Ihre Ausrichtung gegenüber einer Einlauftransporteinrichtung 10 (Fig. 1) verdeutlichen. Demgemäss werden liegende Zargen mit dem Bezugszeichen 4, Zargen die aufgestellt sind und magnetisch hängend transportiert werden mit dem Bezugszeichen 9 und Zargen die sich in einer Transitionsphase zwischen dem liegenden und dem aufgestellten Zustand befinden mit dem Bezugszeichen 4a bezeichnet.

Der Begriff "*freigebbar*" im Zusammenhang mit einem Magneten bedeutet hier dass die magnetische Feldstärke des Magneten nur so stark ist, dass die sich im Wirkungsfeld dieses Magneten befindende Zarge durch einen vordefinierten äusseren Krafteinfluss an- bzw. abhebbar ist, oder dass sie nicht vorhanden ist. Entsprechend bedeutet "*festhaltbar*" dass die magnetische Feldstärke des Magneten so stark ist, dass die sich im Wirkungsfeld dieses Magneten befindende Zarge durch den vordefinierten äusseren Krafteinfluss nicht an- bzw. abhebbar ist. In diesem Zusammenhang wird unter dem Begriff "*deaktivierbar*" in Bezug auf Magneten nicht nur eine vollkommene Abschaltung bzw. Entfernung des Magneten verstanden, sondern es kann sich dabei auch nur lediglich um eine mindestens teilweise Abschirmung (bei Permanentmagneten) oder eine Reduzierung des Stroms (bei Elektromagneten) handeln. Entsprechend wird unter dem Begriff "*aktivierbar*" in Bezug auf Magneten nicht nur eine Einschaltung bzw. ein Einbringen des Magneten verstanden, sondern es kann sich dabei auch um eine mindestens teilweise Entfernung einer Abschirmung (bei Permanentmagneten) oder eine Erhöhung des Stroms (bei Elektromagneten) handeln.

Der Begriff "*Höhe*" einer Zarge bezieht sich auf die vertikale Abmessung der Zarge im aufgestellten Zustand.

Ein "*Magnetkasten*" ist ein Kasten der mindestens einen Magneten, insbesondere mehrere Magnete, in einer speziellen räumlichen Anordnung beherbergt.

Eine "*Magnetanordnung*" kann im Zusammenhang dieses Dokuments nur einen oder auch mehrere Magnete umfassen.

Ein "*Aufstellraum*" ist im vorliegenden Zusammenhang definiert als der Raum in dem die Zarge vom liegenden in den aufgestellt magnetisch hängenden Zustand übergeht.

Zur Vereinfachung der räumlichen Beschreibung ist in den Figuren ein Koordinatensystem eingezeichnet, mit einer x-Achse die einer Transportrichtung T der Zargen entspricht, einer y-Achse die der Vertikalen entspricht, und einer z-Achse die senkrecht auf die x-Achse in die Zeichenebene hinein verläuft.

Der Begriff "*über der Einlauftransporteinrichtung*" oder "*über einen Bereich der Einlauftransporteinrichtung*" ist im vorliegenden Zusammenhang so zu verstehen, dass sich ein Objekt auf das sich dieser Begriff bezieht keinen oder einen vernachlässigbaren Versatz in z-Richtung gegenüber der Einlauftransporteinrichtung hat.

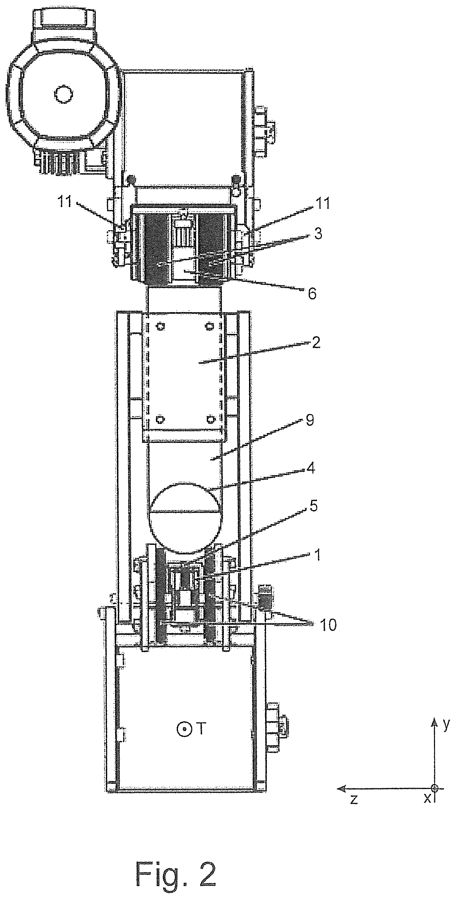

Die Figuren 1 und 2 zeigen ein Ausführungsbeispiel der Erfindung in vereinfachter Darstellung. Eine Zargenaufstellvorrichtung kommt bei der Herstellung von Metalldosen zum Einsatz, bei welcher ein Aufstellen von liegend geförderten Dosenzargen 4 nötig ist. So verlassen die geschweissten Dosenzargen nach der Abdeckung der geschweissten Naht mit einer Beschichtung die entsprechenden Anlageteile in der Regel liegend und werden für die Weiterbearbeitung aufgestellt. Für das Aufstellen wird die Aufstellrichtung wie folgt definiert: Hinterteil aufstellen: die Dose dreht sich über die vorlaufende Kante.

Die Figuren 1 und 2 zeigen eine bevorzugte Ausführungsform einer Zargenaufstellvorrichtung Z. Dabei bezieht sich die nachfolgende Beschreibung auf beide Figuren, da sie dieselbe Ausführungsform zeigen, aber der Klarheit halber zwei verschiedene Ansichten darstellen. Liegende Dosenzargen 4 gelangen in dem gezeigten Ausführungsbeispiel von Fig. 1 von links her in die Aufstellvorrichtung Z und verlassen diese nach rechts in Richtung des Pfeils T. Dabei umfasst die Zargenaufstellvorrichtung Z eine Einlauftransporteinrichtung 10, auf der die liegenden Zargen 4 in einen Aufstellraum der Aufstellvorrichtung Z gelangen, eine Transporteinrichtung 12 die schon aufgestellte Zargen 9 magnetisch hängend transportiert und eine Weitertransporteinrichtung 8 die die Dosen aufgestellt stehend an Weiterverarbeitungsmodulen transportiert.

Die Einlauftransporteinrichtung 10 umfasst eine doppelspurige Transportbahn für den Transport der liegenden Zargen 4. Damit ist eine präzise Zuführung der liegenden Zargen 4 in den Aufstellraum möglich.

Die Weitertransporteinrichtung 8 kann Teil der Zargenaufstellvorrichtung Z sein, wie in der vorliegend beschriebenen Ausführungsform, oder sie kann Teil eines nachfolgenden Moduls sein, das die Zargen von der Transporteinrichtung 12 übernimmt.

Die Einlauftransporteinrichtung 10 und die Weitertransporteinrichtung 8 sind z.B. dem Fachmann bekannte Transportbänder, wie sie bei den Anlagen zur Dosenherstellung bekanntermassen verwendet werden.

Die Transporteinrichtung 12 kann ebenfalls als Transportband ausgeführt sein und ebenfalls dem Fachmann bekannten Antriebsmittel, Umlenkrollen und Stützrollen aufweisen. Über der Transporteinrichtung 12 ist ferner eine Magnetanordnung 6 angeordnet (genannt vierte Magnetanordnung) welche vorzugsweise als einspuriger Permanentmagnet bzw. Permanentmagnetbahn 6 ausgeführt ist, aber auch anders geformt sein kann; z.B. kann die Permanentmagnetbahn auch doppelspurig sein. Insbesondere kann hier auch ein Elektromagnet zum Einsatz kommen. Das vom Permanentmagneten 6 erzeugte Magnetfeld übt eine Anziehungskraft auf die aufgestellten Zargen, die hoch genug ist um die Zargen 9 am Transportband der Transporteinrichtung 12 hängend zu halten. Der einspurige Permanentmagnet 6 erstreckt sich bis über der Weitertransporteinrichtung 8 bis zu einer Zargenabwurfstelle 7, an der die magnetisch hängenden aufgestellten Zargen 9 an die Weitertransporteinrichtung 8 abgegeben werden. Die Abgabe kann dadurch erfolgen, dass die aufgestellten Zargen einfach auf das Transportband der Weitertransporteinrichtung 8 fallen oder sie können kontrolliert mittels hier nicht beschriebenen aber dem Fachmann bekannten Massnahmen auf diese abgestellt werden.

In Figur 1 ist das Aufstellen der liegenden Behälterzargen 4 mittels der Aufstellvorrichtung Z durch ein Kippen über die vorlaufende Kante bzw. den vorlaufenden Rand der Dosenzarge 4 gezeigt. Antriebsmittel, wie Motoren, Umlenkrollen und Stützrollen, sind nur teilweise dargestellt, sind dem Fachmann aber bekannt.

Am Aufstellprozess sind mehrere der Magnetanordnungen beteiligt, die im Folgenden im Detail beschrieben werden.

Wie erwähnt tritt die Zarge 4 liegend in den Aufstellraum ein und wird dabei auf dem Transportband der Einlauftransporteinrichtung 10 mittels einer ersten Magnetanordnung 1 festgehalten. Die erste Magnetanordnung 1 ist von mindestens einem Elektromagneten gebildet, welcher in aktiviertem Zustand die liegende Zarge 4 auf der Einlauftransporteinrichtung 10 festhält und in deaktiviertem Zustand die liegende Zarge 4 freigibt.

Eine zweite Magnetanordnung 2 ist durch mindestens einen Permanentmagneten gebildet, in diesem Beispiel gebildet durch eine Platte, die quer zur Transportrichtung in Transportrichtung geneigt angeordnet ist. Allgemein ist die zweite Magnetanordnung 2 derart angeordnet, dass sie einen über ihre Ausdehnung in der z-Richtung quer zur Transportrichtung T, x im Wesentlichen konstanten Winkel α zur Vertikalen y bildet, wobei 0 ≤ α < 90° ist. Mit anderen Worten ist die zweite Magnetanordnung 2 quer zur Transportrichtung T (z-Richtung) ausgerichtet und gegenüber der yz-Ebene in Transportrichtung T, x um den Winkel α geneigt. Vorzugsweise sind ein Abstand einer unteren Extremität der zweiten Magnetanordnung 2 von der Einlauftransporteinrichtung 10 und/oder der Winkel α einstellbar. Damit kann die Zargenaufstellvorrichtung Z an verschieden grosse Zargen angepasst werden. Kommen beispielsweise liegende Zargen mit einem grösseren Durchmesser in die Vorrichtung, so kann die zweite Magnetanordnung 2 angehoben bzw. bei Zargen mit kleinerem Durchmesser abgesenkt werden. Die Änderung der Neigung (Winkel α) ist hilfreich für eine Justierung der Flugbahn der Zarge 4a während des Aufstellens.

Eine dritte Magnetanordnung 3 ist als doppelspurige Permanentmagnetschiene ausgebildet. Sie ist über der Einlauftransporteinrichtung 10 und der Transporteinrichtung 12 angeordnet. Vorzugsweise entspricht ein Abstand zwischen den Spuren der Permanentmagnetschiene 3 im Wesentlichen einem Zargendurchmesser. Es kann eine Spurbreitenverstellungseinrichtung 11 (vgl. Fig. 2) vorgesehen sein, mittels welcher der Abstand einstellbar ist. Dies erhöht die Flexibilität der Zargenaufstellvorrichtung Z in Bezug auf die sichere, und vorzugsweise mittige Aufnahme der aufgestellten Zargen 9 bei verschiedenen Zargendurchmesser.

Es wird darauf hingewiesen dass alle im Rahmen der beschriebenen Ausführungsform der Zargenaufstellvorrichtung Z als Permanentmagnete ausgewiesene Magnete auch als Elektromagnete ausführbar sind. In diesem Fall übernimmt eine Steuerung 13, die nachfolgend näher beschrieben wird, die Aufgabe der Koordinierung der Aktivierung bzw. Deaktivierung der einzelnen Magneten.

Es ist aber auch möglich, obgleich wegen der höheren Komplexität nicht bevorzugt, das erste Magnetmittel 1, das hier als Elektromagnet beschrieben wird, als Permanentmagnet auszuführen, wobei in diesem Fall seine Aktivierung bzw. Deaktivierung, wieder mittels der Steuerung 13 und etwaiger Antriebsmittel, durch eine mehr oder weniger ausgeprägte magnetische Abschirmung des Magneten in Richtung der Zargen 4, 4a, 9 erfolgt. Dabei kommen Elemente aus Supra 50 oder Supra 60 oder µ-Metall in Frage.

Im Folgenden wird die Funktionsweise der Aufstellvorrichtung Z, insbesondere im Hinblick auf die im Aufstellraum stattfindenden Vorgänge, erläutert.

Die Aufstellvorrichtung Z umfasst einen Sensor 5 zur Erkennung der einlaufenden, liegenden Zarge 4, wobei der Sensor 5 Positionsdaten der liegenden Zarge 4 an die Steuerung 13 übermittelt. Der Sensor kann beispielsweise als Lichtschrankensensor ausgebildet sein, wobei andere gängige und in Frage kommende Sensortypen auch zum Einsatz kommen können.

Der Sensor 5 detektiert das Ankommen einer liegenden Zarge, insbesondere ein Ankommen der Vorderkante der Zarge 4, und übermittelt ein entsprechendes Signal an die Steuerung 13. Die Steuerung 13 aktiviert den Elektromagneten 1, so dass die liegende Zarge 4 an der Einlauftransportvorrichtung 10 festgehalten wird, während sie weitertransportiert wird und unter dem Permanentmagneten 2 ankommt. Sobald die nachlaufende Kante der liegenden Zarge 4 den Permanentmagneten 2 passiert hat wird der Elektromagnet 1 deaktiviert, so dass die nachlaufende Kante der liegenden Zarge 4 vom Magnetfeld des Permanentmagneten 2 erfasst und infolgedessen angehoben wird. Fig. 1 zeigt eine Momentaufnahme des Aufstellvorgangs nachdem der Elektromagnet 1 deaktiviert wurde und Zarge 4a nur noch dem Magnetfeld des Permanentmagneten 2 ausgesetzt ist. Feldlinien dieses Magnetfelds sind schematisch mit dem Bezugszeichen 14a dargestellt.

Die Deaktivierung des Elektromagneten 1 erfolgt zeitverzögert bezogen auf einen Aktivierungszeitpunkt, in Abhängigkeit von einer Transportgeschwindigkeit und einer Höhe der Zarge 4. Der Zeitpunkt der Deaktivierung wird von der Steuerung 13 auf der Basis des zuvor festgestellten Eintrittszeitpunkts der Zarge 4 in den Aufstellraum errechnet. Je nach baulich bedingte Anordnung des Sensors 5 kann dieser auch zur Detektion der nachlaufenden Kante der Zarge 4 verwendet werden, wenn er unmittelbar unter dem Permanentmagneten 2 angeordnet werden kann. Auf diese Weise kann direkt die Detektion der Kanten zur Aktivierung bzw. Deaktivierung des Elektromagneten 1 dienen. Dies hat den Vorteil dass die Höhe der Zarge und die Transportgeschwindigkeit nicht bekannt sein müssen. Eine weitere Lösung in diesem Sinne kann zwei Sensoren umfassen, wobei ein Sensor für die Detektion der vorlaufenden Kante und ein Sensor für die Detektion der nachlaufenden Kante dienen.

Aufgrund der Anhebung der nachlaufenden Kante der Zarge 4a kommt die nachlaufende Kante im Einflussbereich der doppelspurigen Permanentmagnetschiene 3 und wird weiter angehoben, bis die Zarge 4a von der Einlauftransporteinrichtung 10 abhebt. Dabei beschreibt die Zarge 4a einerseits eine translatorische Bewegung in Transportrichtung T aufgrund der Trägheit und andererseits eine vertikale Bewegung, jetzt primär aufgrund der Einwirkung des Magnetfelds der doppelspurigen Magnetschiene 3 (der Einfluss des Permanentmagnetmagneten 2 schwindet immer mehr mit zunehmender Entfernung der Zarge 4a von diesem). Die Überlagerung dieser Bewegungen ergibt die in Fig. 1 dargestellte Flugbahn der Zarge 4a (gestrichelt dargestellt). Feldlinien des Magnetfelds der doppelspurigen Magnetschiene 3 sind schematisch mit dem Bezugszeichen 14b bezeichnet. Wie in der Figur ersichtlich ist bei der am meisten geneigten gestrichelten Darstellung der Zarge 4a die hintere Kante dem Magnetfeld 14a und 14b ausgesetzt und kommt zunehmend in den Einflussbereich des Magnetfelds 14b, was mit den anderen beiden gestrichelten Darstellungen der Zarge 4a verdeutlicht ist. Schliesslich ist die Zarge 4a aufgestellt und wird von der Transporteinrichtung 12 magnetisch hängend weitertransportiert. Magnetische Feldlinien des dafür zuständigen einspurigen Permanentmagneten 6 sind schematisch mit den Feldlinien 14c dargestellt.

Die magnetisch hängende Zarge 9 wird dann auf die oben beschriebene Weise an die Weitertransporteinrichtung 8 abgegeben.

Obwohl bevorzugte Ausführungsformen der Erfindung beschrieben worden sind wird darauf hingewiesen, dass die Erfindung auf anderen Weisen im Rahmen der nachfolgenden Ansprüchen realisiert werden kann. Dabei beziehen sich in der Beschreibung verwendete Begriffe wie "bevorzugt", "insbesondere", "vorteilhaft", etc. nur auf optionale und beispielhafte Ausführungsformen.

## Patentansprüche

1. Magnetische Zargenaufstellvorrichtung (Z), welche eine Einlauftransporteinrichtung (10) zur Förderung von liegenden Zargen (4), eine über der Einlauftransporteinrichtung (10) angeordnete Transporteinrichtung (12) zur Förderung aufgestellter, an der Transporteinrichtung (12) hängender Zargen (9) und eine Steuerung (13) umfasst, wobei eine erste durch die Steuerung (13) steuerbar aktivierbare und deaktivierbare Magnetanordnung (1) unter der Einlauftransporteinrichtung (10) derart angeordnet ist, dass eine auf der Einlauftransporteinrichtung (10) liegende Zarge (4) auf der Einlauftransporteinrichtung (10) freigebbar magnetisch festhaltbar ist, wobei eine zweite Magnetanordnung (2) über einem Bereich der Einlauftransporteinrichtung (10), in welchem die Zargen transportiert werden, angeordnet und derart ausgestaltet ist, dass eine auf der Einlauftransporteinrichtung (10) liegende Zarge (4) mittels des Magnetfelds der zweiten Magnetanordnung (2) bei deaktiviertem Magnetfeld der ersten Magnetanordnung (1) anhebbar ist, wobei eine dritte Magnetanordnung (3) über der Transporteinrichtung (12) vorgesehen und derart ausgestaltet und angeordnet ist, dass eine angehobene Zarge (4a) weiter anhebbar und von der Einlauftransporteinrichtung (10) abhebbar ist und an der Transporteinrichtung (12) magnetisch hängend aufgestellt transportierbar ist, **dadurch gekennzeichnet, dass** die Steuerung (13) ausgestaltet ist, um die erste Magnetanordnung (1) zu aktivieren, wenn eine Vorderkante einer auf der Einlauftransporteinrichtung (10) liegenden Zarge (4) die zweite Magnetanordnung (2) passiert und um die erste Magnetanordnung (1) zu deaktivieren, wenn eine nachlaufende Kante dieser Zarge (4) unter der zweiten Magnetanordnung (2) zu liegen kommt.

2. Magnetische Zargenaufstellvorrichtung nach Anspruch 1, wobei die erste Magnetanordnung (1) von mindestens einem Elektromagneten gebildet ist, welcher in aktiviertem Zustand die liegende Zarge (4) auf der Einlauftransporteinrichtung (10) festhält und in deaktiviertem Zustand die liegende Zarge (4) freigibt.

3. Magnetische Zargenaufstellvorrichtung nach Anspruch 1 oder 2, wobei die zweite Magnetanordnung (2) durch mindestens einen Permanentmagneten gebildet ist.

4. Magnetische Zargenaufstellvorrichtung nach einem der vorangehenden Ansprüche, wobei die zweite Magnetanordnung (2) quer zur Transportrichtung (T) ausgerichtet und um einen Winkel (α), bezüglich einer vertikalen Querebene (yz), in Transportrichtung (T, x) geneigt ist, wobei 0 ≤ α < 90°, insbesondere wobei ein Abstand einer unteren Extremität der zweiten Magnetanordnung (2) von der Einlauftransporteinrichtung und/oder der Winkel (α) einstellbar sind bzw. ist.

5. Magnetische Zargenaufstellvorrichtung nach einem der vorangehenden Ansprüche, wobei die dritte Magnetanordnung (3) als doppelspurige Permanentmagnetschiene ausgebildet ist.

6. Magnetische Zargenaufstellvorrichtung nach Anspruch 5, wobei ein Abstand zwischen den Spuren der Permanentmagnetschiene (3) im Wesentlichen einem Zargendurchmesser entspricht, insbesondere wobei der Abstand mittels einer Spurbreitenverstellungseinrichtung (11) einstellbar ist.

7. Magnetische Zargenaufstellvorrichtung nach einem der vorangehenden Ansprüche, wobei mindestens ein Sensor (5) zur Erkennung der einlaufenden, liegenden Zarge (4) vorgesehen ist, wobei der Sensor (5) Positionsdaten der liegenden Zarge (4) an die Steuerung übermittelt.

8. Magnetische Zargenaufstellvorrichtung nach Anspruch 7, wobei die Deaktivierung der ersten Magnetanordnung (1) zeitverzögert bezogen auf einen Aktivierungszeitpunkt in Abhängigkeit von einer Transportgeschwindigkeit und einer Höhe der Zarge erfolgt.

9. Magnetische Zargenaufstellvorrichtung nach einem der vorangehenden Ansprüche, wobei im Anschluss an der dritten Magnetanordnung (3) eine vierte Magnetanordnung (6), insbesondere als einspuriger Permanentmagnet ausgebildet, die zum magnetisch hängenden Transport der aufgestellten Zargen (9) vorgesehen ist, wobei sich die vierte Magnetanordnung (6) bis über eine Weitertransporteinrichtung (8) bis zu einer Zargenabwurfstelle (7) erstreckt, an der die magnetisch hängenden aufgestellten Zargen (9) an die Weitertransporteinrichtung (8) abgebbar sind.

10. Magnetische Zargenaufstellvorrichtung nach einem der vorangehenden Ansprüche, wobei die Einlauftransporteinrichtung (10) eine doppelspurige Transportbahn für den Transport der liegenden Zargen (4) umfasst.

11. Vorrichtung zur Herstellung von Dosenzargen mit mindestens einer magnetischen Zargenaufstellvorrichtung (Z) nach einem der vorangehenden Ansprüche.

12. Verwendung der magnetischen Zargenaufstellvorrichtung (Z) nach einem der Ansprüche 1 bis 10 zur Aufstellung von Zargen (4) mit einem Längen zu Durchmesserverhältnis von 3 zu 1.

## Claims

1. Magnetic body lifting device for bodies (Z), comprising an input transport device (10) for transporting lying bodies (4), a transport device (12) for transporting lifted bodies (9) hanging at the transport device (12), arranged above the input transport device (10), and a control device (13), wherein a first magnet arrangement (1) which is activated and deactivated by the control device (13) is arranged below the input transport device (10) in such a way that a body (4) lying on the input transport device (10) is magnetically held in a releasable way on the input transport device (10), wherein a second magnet arrangement (2) is arranged above an area of the input transport device (10), into which the bodies are transported, and is formed in such a way that a body (4) lying on the input transport device (10) is lifted by the magnetic field of the second magnet arrangement (10) when the magnetic field of the first magnet arrangement (1) is deactivated, wherein a third magnet arrangement (3) is provided above the transport device (12) and is formed and arranged in such a way that a partially lifted body (4a) is lifted more and is lifted off the input transport device (10) and is transported in an upright position hanging magnetically at the transport device (12), **characterized in that** the control device (13) is adapted to activate the first magnet arrangement (1) when a front edge of a body (4) lying on the input transport device (10) has passed the second magnet arrangement (2) and to deactivate the first magnet arrangement (1) when a trailing edge of this body (4) comes to lie below the second magnet arrangement (2).

2. Magnetic body lifting device according to claim 1, wherein the first magnet arrangement (1) is formed by at least an electromagnet which holds the lying body (4) on the input transport device (10) in activated state and releases the lying body (4) in deactivated state.

3. Magnetic body lifting device according to claim 1 or 2, wherein the second magnet arrangement (2) is formed by at least a permanent magnet.

4. Magnetic body lifting device according to one of the preceding claims, wherein the second magnet arrangement (2) is oriented transversally with respect to the transport direction (T) and is inclined in transport direction (T, x) by an angle (α) with respect to a vertical transversal plane (yz), wherein 0 ≤ α ≤ 90°, particularly wherein a distance of a bottom extremity of the second magnet arrangement (2) from the input transport device and/or the angle (α) is or are, respectively, adjustable.

5. Magnetic body lifting device according to one of the preceding claims, wherein the third magnet arrangement (3) is formed as double-tracked permanent magnet rail.

6. Magnetic body lifting device according claim 5, wherein a distance between the tracks of the permanent magnet rail (3) substantially corresponds to a diameter of the body, particularly wherein the distance is adjustable by means of a path gauge adjustment device (11).

7. Magnetic body lifting device according to one of the preceding claims, wherein at least a sensor (5) for detecting the incoming lying body (4) is provided, wherein the sensor (5) transmits position data of the lying body (4) to the control device.

8. Magnetic body lifting device according to claim 7, wherein the deactivation of the first magnet arrangement (1) is carried out delayed with respect to an activation instant depending on a transport speed and a height of the body.

9. Magnetic body lifting device according to one of the preceding claims, wherein a fourth magnet arrangement (6), particularly formed as single-tracked permanent magnet, is provided for transporting the lifted bodies (9) magnetically hanging and follows the third magnet arrangement (3), wherein the fourth magnet arrangement (6) extends above a transport device for further transportation (8) up to a body release position (7) where the magnetically hanging lifted bodies (9) are delivered to the transport device for further transportation (8).

10. Magnetic body lifting device according to one of the preceding claims, wherein the input transport device (10) comprises a double-tracked transport band for transporting the lying bodies (4).

11. Device for manufacturing can bodies with at least a magnetic body lifting device (Z) according to one of the preceding claims.

12. Use of the magnetic body lifting device (Z) according to one of the claims 1 to 10 for lifting bodies (4) with a length to diameter ratio of 3 to 1.

## Revendications

1. Dispositif magnétique de levage de corps pour des corps (Z), comprenant un dispositif de transport d'entrée (10) pour transporter des corps allongés (4), un dispositif de transport (12) pour transporter des corps levés (9) suspendus au dispositif de transport (12), arrangé au-dessus du dispositif de transport d'entrée (10), et un dispositif de commande (13), un premier agencement d'aimants (1) qui est activé et désactivé par le dispositif de commande (13) étant arrangé au-dessous du dispositif de transport d'entrée (10) de sorte qu'un corps (4) allongé sur le dispositif de transport d'entrée (10) est magnétiquement retenu de manière détachable sur le dispositif de transport d'entrée (10), un deuxième agencement d'aimants (2) étant arrangé au-dessus d'une zone du dispositif de transport d'entrée (10), dans laquelle les corps sont transportés, et étant adapté de sorte qu'un corps (4) allongé sur le dispositif de transport d'entrée (10) est levé par le champ magnétique du deuxième agencement d'aimants (10) quand le champ magnétique du premier agencement d'aimants (1) est désactivé, un troisième agencement d'aimants (3) étant prévu au-dessus du dispositif de transport (12) et étant formé et arrangé de sorte qu'un corps partiellement levé (4a) est levé plus et est soulevé du dispositif de transport d'entrée (10) et est transporté en position verticale et suspendu magnétiquement au dispositif de transport (12), **caractérisé en ce que** le dispositif de commande (13) est adapté à activer le premier agencement d'aimants (1) quand un bord frontal d'un corps (4) allongé sur le dispositif de transport d'entrée (10) a passé par le deuxième agencement d'aimants (2) et à désactiver le premier agencement d'aimants (1) quand un bord arrière de ce corps (4) vient se poser au-dessous du deuxième agencement d'aimants (2).

2. Dispositif magnétique de levage de corps selon la revendication 1, le premier agencement d'aimants (1) étant formé par au moins un électroaimant qui retient le corps allongé (4) sur le dispositif de transport d'entrée (10) en état activé et libère le corps allongé (4) en état désactivé.

3. Dispositif magnétique de levage de corps selon la revendication 1 ou 2, le deuxième agencement d'aimants (2) étant formé par au moins un aimant permanent.

4. Dispositif magnétique de levage de corps selon l'une des revendications précédentes, le deuxième agencement d'aimants (2) étant orienté de manière transversale par rapport à la direction de transport (T) et étant incliné en direction de transport (T, x) par un angle (α) par rapport à un plan transversal vertical (yz), avec 0 ≤ α ≤ 90°, particulièrement une distance entre une extrémité de fond du deuxième agencement d'aimants (2) et le dispositif de transport et/ou l'angle (α) est ou bien sont ajustables.

5. Dispositif magnétique de levage de corps selon l'une des revendications précédentes, le troisième agencement d'aimants (3) ayant une forme de rail à double voie d'aimants permanents.

6. Dispositif magnétique de levage de corps selon la revendication 5, une distance entre les voies du rail d'aimants permanents (3) correspondant essentiellement à un diamètre du corps, particulièrement la distance étant ajustable à l'aide d'un dispositif d'ajustage d'écartement des voies (11).

7. Dispositif magnétique de levage de corps selon l'une des revendications précédentes, au moins un capteur (5) pour détecter le corps (4) allongé entrant étant prévu, le capteur (5) transmettant des données de position du corps allongé (4) au dispositif de commande.

8. Dispositif magnétique de levage de corps selon la revendication 7, la désactivation du premier agencement d'aimants (1) étant effectuée de manière retardée par rapport à un instant d'activation dépendant d'une vitesse de transport et d'une hauteur du corps.

9. Dispositif magnétique de levage de corps selon l'une des revendications précédentes, un quatrième agencement d'aimants (6), particulièrement ayant une forme de rail à double voie d'aimants permanents, étant prévu pour transporter les corps soulevés (9) suspendus magnétiquement et suivant le troisième agencement d'aimants (3), le quatrième agencement d'aimants (6) s'étendant au-dessus d'un dispositif de transport pour un suivant transport (8) jusqu'à une position de détachement du corps (7) où les corps soulevés magnétiquement (9) sont livrés au dispositif de transport pour un suivant transport (8).

10. Dispositif magnétique de levage de corps selon l'une des revendications précédentes, le dispositif de transport d'entrée (10) comprenant une bande de transport à deux voies pour transporter les corps allongés (4).

11. Dispositif pour fabriquer des corps de boite avec au moins un dispositif magnétique de levage de corps selon l'une des revendications précédentes.

12. Utilisation du dispositif magnétique de levage de corps (Z) selon l'une des revendications 1 à 10 pour lever des corps (4) avec un rapport longueur/diamètre de 3 à 1.
